(19) **Europäisches Patentamt**
**European Patent Office**
**Office européen des brevets**

(11) **EP 3 823 161 B1**

(12) **FASCICULE DE BREVET EUROPEEN**

(45) Date de publication et mention de la délivrance du brevet:
**03.04.2024 Bulletin 2024/14**

(21) Numéro de dépôt: **20207269.0**

(22) Date de dépôt: **12.11.2020**

(51) Classification Internationale des Brevets (IPC):
**H02S 50/00** *(2014.01)* **H02J 3/00** *(2006.01)*

(52) Classification Coopérative des Brevets (CPC):
**H02S 50/00;** Y02E 10/50

(54) **PROCÉDÉ DE DÉTERMINATION DE LA GRANDEUR PHYSIQUE DE SORTIE D'UN SYSTÈME ET PROCÉDÉ DE PILOTAGE ASSOCIÉ**

VERFAHREN ZUR BESTIMMUNG DER PHYSISCHEN AUSGANGSGRÖSSE EINES SYSTEMS, UND ENTSPRECHENDES STEUERVERFAHREN

METHOD FOR DETERMINING THE PHYSICAL MAGNITUDE OF OUTPUT FROM A SYSTEM AND ASSOCIATED CONTROL METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2019 FR 1912672**

(43) Date de publication de la demande:
**19.05.2021 Bulletin 2021/20**

(73) Titulaire: **Commissariat à l'Energie Atomique et aux Energies Alternatives**
**75015 Paris (FR)**

(72) Inventeurs:
• **GUILLOU, Hervé**
**38054 GRENOBLE CEDEX 9 (FR)**
• **GAOUA, Yacine**
**38054 GRENOBLE CEDEX 9 (FR)**

(74) Mandataire: **Cabinet Camus Lebkiri**
**25 rue de Maubeuge**
**75009 Paris (FR)**

(56) Documents cités:
**US-A1- 2017 177 766**

• **LI YANBIN ET AL: "Short-term prediction of the output power of PV system based on improved grey prediction model", PROCEEDINGS OF THE 2014 INTERNATIONAL CONFERENCE ON ADVANCED MECHATRONIC SYSTEMS, IEEE, 10 août 2014 (2014-08-10), pages 547-551, XP032652290, DOI: 10.1109/ICAMECHS.2014.6911606**

**Description**

**DOMAINE TECHNIQUE DE L'INVENTION**

Le domaine technique de l'invention est celui de la linéarisation de modèles physiques et du pilotage d'installations, par exemple d'installations électriques.

La présente invention concerne un procédé de détermination de la grandeur physique de sortie d'un système à partir d'une grandeur physique d'entrée et d'un modèle non linéaire du système. Elle propose également un procédé de pilotage faisant usage d'un tel procédé de détermination de la grandeur physique de sortie d'un système. Le document LI YANBIN ET AL: "Short-term prédiction of the output power of PV system based on improved grey prédiction model",PROCEEDINGS OF THE 2014 INTERNATIONAL CONFERENCE ON ADVANCED MECHATRONIC SYSTEMS, IEEE, 10 août 2014 (2014-08-10), pages 547-551, XP032652290,DOI: 10.1109/ ICAMECHS.2014.6911606 est relevant pour cette invention.

**ARRIERE-PLAN TECHNOLOGIQUE DE L'INVENTION**

Pour gérer efficacement un système multiénergies en réseau, il est primordial d'équiper ce système d'un dispositif de pilotage intelligent pour répondre aux attentes du gestionnaire du réseau/système qui souhaite à la fois efficacité économique, réduction de l'impact environnemental et gestion multiénergies. En effet, la mise en oeuvre d'un tel pilotage intelligent via une commande dite prédictive permet de gérer, d'une façon optimale, le fonctionnement des sources énergétiques sur un horizon d'anticipation, en fonction des prévisions de la demande et de la production pour les sources intermittentes (PV, éolien, etc.). Elle nécessite cependant le développement d'un modèle d'optimisation reflétant le fonctionnement du système multiénergie, ce qui suppose un nécessaire compromis entre précision de modélisation (donc, qualité de la commande prédictive) et temps de calcul.

En effet, la modélisation précise du système multiénergie permet d'avoir un pilotage performant (c.-à-d., les trajectoires optimales de fonctionnement pour les sources énergétiques), mais nécessite des temps de calcul élevés pour déterminer les trajectoires optimales. L'utilisation d'une modélisation précise est donc difficilement compatible avec un déploiement sur terrain pour un pilotage en temps réel. A l'inverse, une modélisation réduite du système multiénergie conduit à un pilotage de faible performance (c.-à-d., les trajectoires sous-optimales) mais avec des temps de calcul réduits. L'utilisation d'une modélisation réduite est donc compatible avec un déploiement sur le terrain pour un pilotage en temps réel.

Afin de réduire les temps de calculs, en particulier dans le cas de la modélisation précise, une solution connue est de linéariser les modèles en question, tout en préservant au maximum la précision de prédiction. Une telle linéarisation permet de générer un pilotage de haut niveau via la commande prédictive avec des temps de calcul réduits pour calculer les trajectoires optimales de fonctionnement des sources énergétiques.

Les méthodes de linéarisation les plus utilisées dans ce contexte sont les techniques dites SOS1 pour Special Ordered Sets of type 1 et SOS2 pour Special Ordered Sets of type 2.

La méthode SOS1 repose sur un ensemble de variables, dont au maximum une variable peut prendre une valeur strictement positive, toutes les autres variables étant égales à 0. Cette méthode permet de décomposer en plusieurs morceaux (ou segments) linéaires la fonction non linéaire. Des variables binaires sont définies de sorte à préciser lequel des morceaux, parmi les différents morceaux, est utilisé afin de calculer la valeur d'une grandeur de sortie quelconque pour une valeur d'entrée quelconque. Par exemple, dans le cas des pertes énergétiques variables d'un convertisseur en fonction de la puissance $P_{loss} = f(P)$, pour chaque instant $t$, la méthode SOS1 permet de choisir en fonction de la puissance $P(t)$, le morceau linéaire adéquat parmi l'ensemble des morceaux linéaires, constituant la fonction non-linaire $f(P)$, pour calculer les pertes énergétiques $P_{loss}(P)$ à l'instant $t$. Pour cela, la méthode SOS1 utilise des variables binaires 0/1 pour chaque instant t et pour chaque morceau linéaire de la fonction $f(P)$ afin de décider quelle variable binaire (c.-à-d., quel morceau) est utilisée en lui affectant la valeur 1 et pour tout le reste des variables binaires la valeur 0.

La méthode SOS2 repose quant à elle sur un ensemble ordonné de variables non négatives, dont deux variables peuvent prendre des valeurs strictement positives avec la condition que ces deux variables doivent être consécutives dans leur ordre. Cette méthode présente l'avantage de nécessiter moins de variables binaires que la méthode SOS1, ce qui la rend moins gourmande en ressources de calcul. Par exemple, dans le cas des pertes énergiques d'un convertisseur $P_{loss} = f(P)$, la linéarisation par morceaux de la fonction $f$ via la méthode SOS2 s'écrit à l'aide des contraintes suivantes :

$$\begin{cases} X = \sum_{i=1}^{N} \overline{x}_i u_i \\ Y = \sum_{i=1}^{N} \overline{y}_i u_i \\ \sum_{i=1}^{N} u_i = 1 \\ u_i \in SOS2, \qquad \forall i \in \{1 \dots N\} \end{cases} \quad (3)$$

où $u_i \in [0,1]$, $\forall i \in \{1 \dots N\}$, $\overline{y}_i = f(\overline{x_i})$, $X$ est la valeur de la puissance pour laquelle on cherche à déterminer la valeur Y de perte énergétique. La contrainte $u_i \in SOS2$, $\forall i \in \{1 \dots N\}$ signifie que seules deux coordonnées $u_i$ consécutives peuvent être différentes de zéro.

Les deux méthodes précédentes présentent l'inconvénient majeur d'avoir recours à un nombre élevé de variables binaires, ce qui rend les calculs relativement complexes et donc difficilement compatibles avec le pilotage en temps réel d'une installation pour laquelle il est nécessaire de calculer une consigne dans un temps relativement court (dépendant du type d'installation).

Il existe donc un besoin d'une méthode permettant de déterminer la valeur de sortie d'un modèle non linéaire de manière plus efficace que les méthodes de l'état de la technique.

## RESUME DE L'INVENTION

L'invention offre une solution aux problèmes évoqués précédemment, en proposant une méthode permettant de minimiser, voire supprimer lorsque le modèle est convexe, l'utilisation de variables binaires.

Un premier aspect de l'invention concerne un procédé, comme décrit dans la revendication 1, de détermination de la grandeur physique de sortie Y d'un système à partir d'une grandeur physique d'entrée $X$ dudit système et d'un modèle physique non linéaire et convexe dudit système associant à une grandeur physique d'entrée $\overline{x}_i$ une grandeur physique de sortie $\overline{y}_i$, le procédé comprenant :

- une étape de détermination, à l'aide du modèle physique non linéaire, d'une pluralité de points de fonctionnement $\overline{M}_i$ de coordonnées $(\overline{x}_i, \overline{y}_i)$ avec $i \in [1, N]$ ;
- une étape de détermination d'un vecteur optimal $U^{opt}$ parmi une pluralité de vecteurs $U^j$, lesdits vecteurs $U^j$ comportant $N$ coordonnées $u_i^j \in [0,1]$, les contraintes sur lesdites coordonnées étant :

$$\begin{cases} X = \sum_{i=1}^{N} \overline{x}_i \times u_i^j, \forall j \\ \sum_{i=1}^{N} u_i = 1, \forall j \end{cases}$$

le vecteur optimal $U^{opt}$ étant associé à la fonction objectif suivante la plus faible :

$$M \times \sum_{i=1}^{N} \overline{y}_i \times u_i^j$$

où $M$ est un coefficient de pondération strictement supérieur à zéro ;

- une étape de détermination de la grandeur physique de sortie $Y$ donnée par :

$$Y = \sum_{i=1}^{N} \overline{y}_i \times u_i^{opt}$$

Le procédé selon un premier aspect de l'invention permet de supprimer l'utilisation de variables binaires sous forme de contraintes de type SOS1 ou SOS2 lors de la linéarisation du modèle, réduisant ainsi la puissance de calcul nécessaire pour effectuer cette linéarisation. La suppression des variables binaires entraine l'existence d'une pluralité de solutions compatibles avec les contraintes imposées parmi lesquelles il convient de choisir la solution optimale. Pour ce faire, les inventeurs proposent une utilisation astucieuse de la convexité du modèle au travers d'une fonction objectif qui permet de déterminer la solution optimale.

Un deuxième aspect de l'invention concerne un procédé, comme décrit dans la revendication 2, de détermination de la grandeur physique de sortie Y d'un système à partir d'une grandeur physique d'entrée $X$ dudit système et d'un modèle physique non linéaire et non convexe dudit système associant à une grandeur physique d'entrée $\overline{x}_i$ une grandeur physique de sortie $\overline{y}_i$, le procédé comprenant :

- une étape de détermination, à l'aide du modèle physique non linéaire, d'une pluralité de points de fonctionnement $\overline{M}_i$ de coordonnées $(\overline{x}_i, \overline{y}_i)$ avec $i \in [1, N]$ ;
- une étape de détermination, d'une pluralité de plage $R_k$ de valeurs de $\overline{x}_i$, le modèle physique étant convexe sur chacune des plages $R_k$ de la pluralité de plages $R_k$ ainsi déterminées ;
- une étape de détermination de la plage $R_r$ parmi la pluralité de plage $R_k$ telle que $X \in R_r$ ;
- une étape de détermination d'un vecteur optimal $U^{opt}$ parmi une pluralité de vecteur $U^j$, lesdits vecteurs $U^j$ comportant $N$ coordonnées $u_i^j \in [0,1]$, les contraintes sur lesdites coordonnées étant :

$$\begin{cases} X = \sum_{R_k} \sum_{i \in R_r} \overline{x}_i \times u_i^j, \forall j \\ \sum_{i \in R_r} u_i^j = 1, \forall j \\ \sum_{i \notin R_r} u_i^j = 0, \forall j \end{cases}$$

- le vecteur optimal $U^{opt}$ étant associé à la fonction objectif suivante la plus faible :

$$M \times \sum_{R_k} \sum_{i \in R_r} \overline{y}_i \times u_i^j$$

où $M$ est un coefficient de pondération strictement supérieur à zéro ;
- une étape de détermination de la grandeur physique de sortie $Y$ donnée par :

$$Y = \sum_{R_k} \sum_{i \in R_r} \overline{y}_i \times u_i^{opt}$$

Le procédé selon un deuxième aspect de l'invention permet de limiter l'usage des variables binaires à la gestion de la plage convexe sélectionnée lors de la linéarisation du modèle, réduisant ainsi la puissance de calcul nécessaire pour effectuer cette linéarisation. La limitation des variables binaires à la seule gestion de la plage convexe sélectionnée entraine l'existence d'une pluralité de solutions compatibles avec les contraintes imposées parmi lesquelles il convient de choisir la solution optimale. Pour ce faire, comme dans le procédé selon un premier aspect de l'invention, les inventeurs proposent une utilisation astucieuse de la convexité du modèle sur la plage convexe sélectionnée au travers d'une fonction objectif qui permet de déterminer la solution optimale.

Outre les caractéristiques qui viennent d'être évoquées dans le paragraphe précédent, le procédé selon un premier ou un deuxième aspect de l'invention peut présenter une ou plusieurs caractéristiques complémentaires parmi les suivantes, considérées individuellement ou selon toutes les combinaisons techniquement possibles.

Dans un mode de réalisation, le procédé comprend une étape d'acquisition d'une pluralité de grandeurs physiques d'entrée et de sortie du système de sorte à déterminer le modèle physique dudit système. De préférence, le nombre de grandeurs physiques acquises lors de cette étape est supérieur à $N$.

Un troisième aspect de l'invention concerne un procédé de pilotage d'un système comprenant :

- une étape de détermination de l'évolution temporelle du système, la grandeur physique de sortie du système lors de cette détermination étant déterminée à l'aide d'un procédé selon un premier ou un deuxième aspect de l'invention ;
- une étape de détermination d'une consigne, ladite consigne étant déterminée en fonction de l'évolution temporelle du système déterminée précédemment.

Un quatrième aspect de l'invention concerne un programme d'ordinateur comprenant des instructions qui, lorsque le programme est exécuté par un ordinateur, conduisent celui-ci à mettre en oeuvre un procédé selon un premier ou un deuxième aspect de l'invention.

Un cinquième aspect de l'invention concerne un support de données lisible par ordinateur, sur lequel est enregistré le programme d'ordinateur selon un quatrième aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La [Fig. 1] montre un ordinogramme d'un procédé selon un premier aspect de l'invention.
- La [Fig. 2] illustre une première étape d'un procédé selon un premier aspect de l'invention.
- La [Fig. 3] et la [Fig. 4] illustrent les conséquences de l'absence de variable binaire sur les valeurs compatibles avec les contraintes.
- La [Fig. 5] illustre une deuxième étape d'un procédé selon un premier aspect de l'invention.
- La [Fig. 6] montre une représentation schématique d'un système électrique modélisable par un modèle non linéaire.
- La [Fig. 7] montre un ordinogramme d'un procédé selon un deuxième aspect de l'invention.
- La [Fig. 8] illustre un modèle non convexe.
- La [Fig. 9] illustre la séparation du modèle non-convexe la figure 8 en deux plages.

## DESCRIPTION DETAILLEE

Les figures sont présentées à titre indicatif et nullement limitatif de l'invention. Sauf précision contraire, un même élément apparaissant sur des figures différentes présente une référence unique.

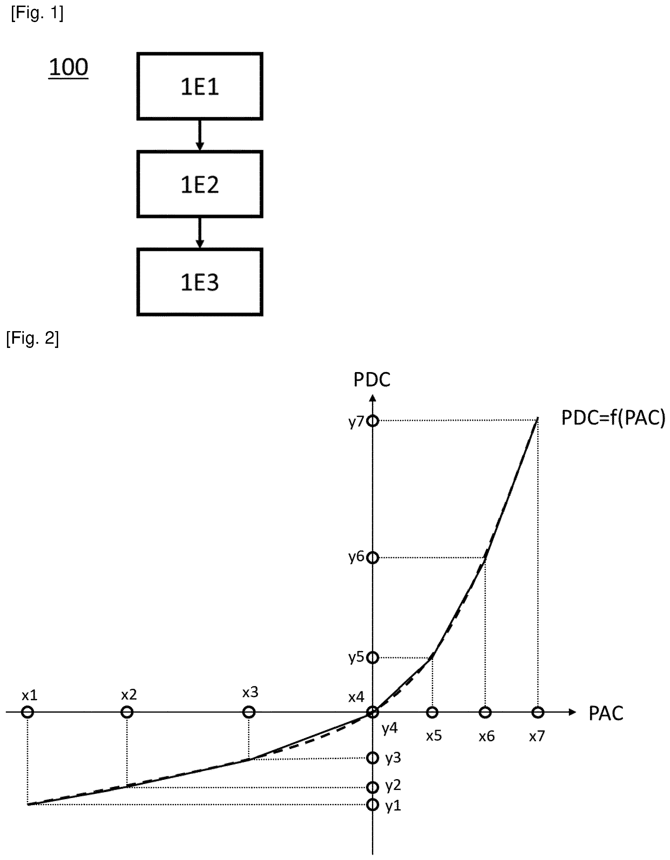

Un premier aspect de l'invention illustré à la figure 1 concerne un procédé 100 de détermination de la grandeur physique de sortie $Y$ d'un système à partir d'une grandeur physique d'entrée $X$ dudit système et d'un modèle physique non linéaire et convexe dudit système associant à une grandeur physique d'entrée $\overline{x}_i$ une grandeur physique de sortie $\overline{y}_i$. Autrement dit, le procédé 100 selon un premier aspect de l'invention permet de déterminer, à partir d'une grandeur physique d'entrée d'un système, une grande physique de sortie du système en question, un modèle non linéaire convexe du système étant nécessaire à cette détermination.

Le procédé 100 selon un premier aspect de l'invention comprend une étape 1E1 de détermination, à l'aide du modèle physique non linéaire, d'une pluralité de points de fonctionnement $\overline{M}_i$ de coordonnées $(\overline{x}_i, \overline{y}_i)$ avec $i \in [1, N]$. Cette étape 1E1 est illustrée à la figure 2 dans lequel le nombre de points est égal à 7, le modèle étant représenté sur la figure par la fonction $f(x)$ qui à une puissance $PAC$ associe une perte énergétique $PDC$. Comme le monde la figure 2, le modèle associé à la fonction $f(x)$ est non-linéaire et convexe. Bien entendu, un plus grand ou un plus petit nombre de points pourrait être utilisé notamment en fonction du degré de non-linéarité du modèle et/ou de la précision souhaitée dans la détermination de la grandeur physique de sortie $Y$.

Dans un mode de réalisation, le procédé comprend une étape d'acquisition d'une pluralité de grandeurs physiques d'entrée et de sortie du système de sorte à déterminer le modèle physique dudit système. Autrement dit, lors de cette étape, une pluralité de points expérimentaux $M_n$ de coordonnée $(x_n, y_n)$ sont acquis de sorte à pouvoir déterminer le modèle physique du système. Le nombre de points acquis est de préférence supérieur à $N$ (il pourrait également être égal à $N$, mais pas inférieur).

Le procédé 100 selon un premier aspect de l'invention comprend également une étape 1E2 de détermination d'un vecteur optimal $U^{opt}$ parmi une pluralité de vecteurs $U^j$, lesdits vecteurs $U^j$ comportant $N$ coordonnées $u_i^j \in [0,1]$, les contraintes sur lesdites coordonnées étant :

$$\begin{cases} X = \sum_{i=1}^{N} \overline{x}_i \times u_i^j, \forall j \\ \sum_{i=1}^{N} u_i^j = 1, \forall j \end{cases}$$

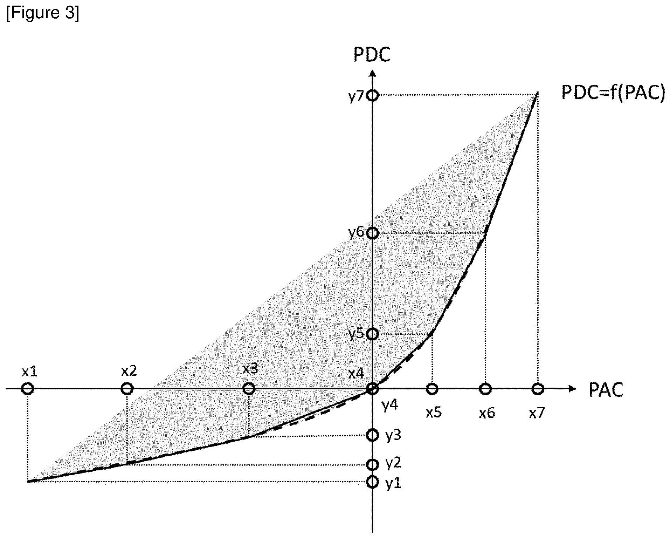

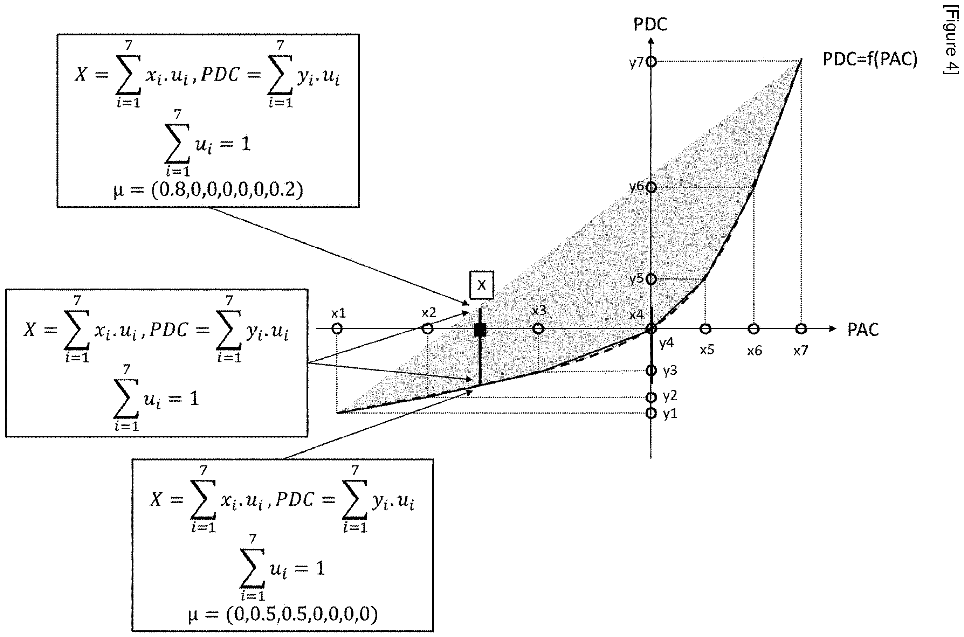

Il est important de noter ici que, dans le procédé 100 selon un premier aspect de l'invention, les contraintes associées à des variables binaires ont disparu. Cela revient à considérer une zone représentée en « gris » sur la figure 3. Autrement dit, comme illustré à la figure 4, pour une grandeur physique d'entrée $X$ donnée, cela revient à envisager l'ensemble des grandeurs physiques de sortie $Y$ situées parmi les valeurs des ordonnées repérées par la droite rouge (en pointiller au niveau de la grandeur physique d'entrée $X$ considérée). Dans la figure 4, la grandeur physique de sortie $Y$ la plus élevée est associée au vecteur $U = (0.8,0,0,0,0,0.2)$ tandis que la grandeur physique de sortie $Y$ la plus faible est associée au vecteur $U = (0,0.5,0.5,0,0,0)$. Il importe cependant de ne sélectionner qu'un seul vecteur $U^{opt}$ parmi la pluralité de vecteurs $U^j$ possibles, que l'on désignera par vecteur optimal $U^{opt}$.

Afin d'effectuer cette sélection, le vecteur optimal est associé à la fonction objectif suivante la plus faible :

$$M \times \sum_{i=1}^{N} \overline{y}_i \times u_i^j$$

où $M$ est un coefficient de pondération strictement supérieur à zéro. Autrement dit, on détermine le vecteur $U^{opt}$ permettant de minimiser la fonction objectif précédente. Dans l'exemple de la figure 4, le vecteur $U^{opt} = (0,0.5,0.5,0,0,0)$.

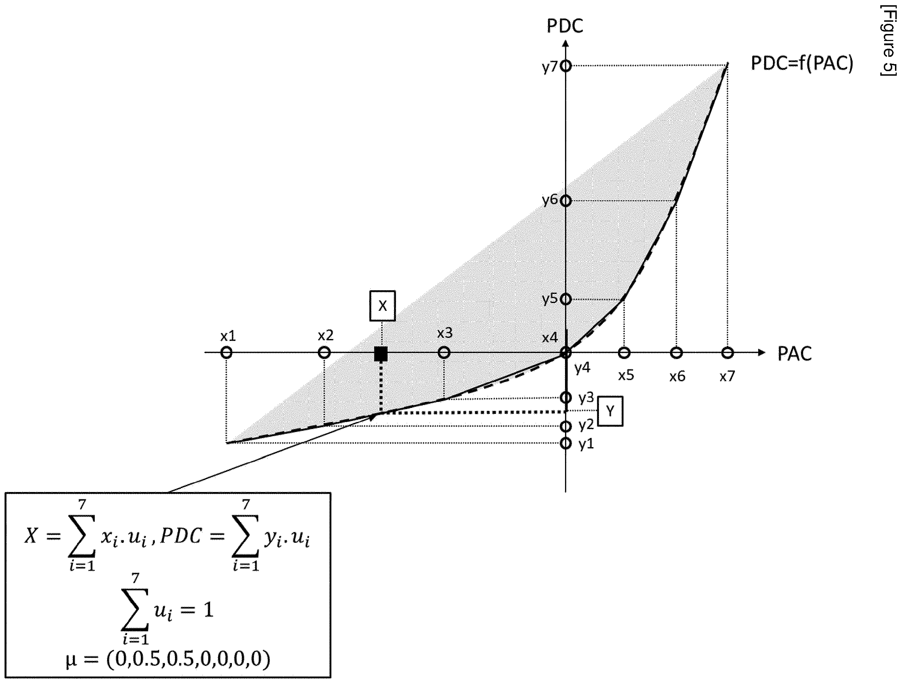

Une fois le vecteur optimal $U^{opt}$ déterminé, il est possible de déterminer la grandeur physique de sortie. Pour cela, comme illustré à la figure 5, le procédé 100 selon un premier aspect de l'invention comprend une étape 1E3 de détermination de la grandeur physique de sortie $Y$ donnée par :

$$Y = \sum_{i=1}^{N} \overline{y}_i \times u_i^{opt}$$

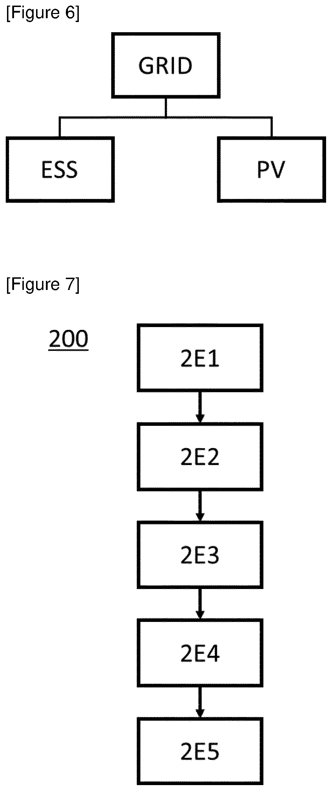

Le procédé 100 selon l'invention peut par exemple être utilisé pour piloter un système tel qu'illustré à la figure 6. Le système en question se compose de panneaux photovoltaïques PV, d'un dispositif de stockage ESS ainsi que d'une grille réseau GRID. Dans cet exemple, le système est modélisé sur un horizon de 24h avec un pas de temps de 1 minute et le stockage est modélisé à l'aide de la fonction $PDC = f(PAC)$ décrite précédemment. Dans ce modèle, le système de stockage ESS contient une fonction de pertes énergétiques non linéaire et convexe qui peut donc être linéarisée par morceaux. Il est donc possible de comparer le procédé 100 selon un premier aspect de l'invention à la méthode SOS2 de l'état de la technique. Le tableau 1 ci-après présente les résultats comparatifs entre ces deux méthodes. On observe que, pour la même solution, le temps de résolution passe de 2 h pour une méthode selon l'état de la technique à 0,2 seconde pour un procédé 100 selon un premier aspect de l'invention.

[Tableau 1]

| | Méthode SOS2 | Procédé (100) selon un premier aspect de l'invention |
|---|---|---|
| Nombre de variables continues | 12960 | 12960 |

(suite)

|  | Méthode SOS2 | Procédé (100) selon un premier aspect de l'invention |
|---|---|---|
| Nombre de variables discrètes | 10080 | 0 |
| Temps de calcul de la solution optimale | 2h | 0,2s |

On le voit donc, la suppression des variables discrètes a permis d'améliorer de plusieurs ordres de grandeur le temps nécessaire au calcul d'une solution optimale.

Le procédé 100 selon un premier aspect de l'invention, bien que tirant avantage de la suppression des variables binaires, ne permet pas en revanche de traiter des modèles qui sont non-convexes. Afin de remédier à cette limitation, un deuxième aspect de l'invention illustré à la figure 7 concerne un procédé 200 de détermination de la grandeur physique de sortie Y d'un système à partir d'une grandeur physique d'entrée $X$ dudit système et d'un modèle physique non linéaire dudit système associant à une grandeur physique d'entrée $\overline{x}_i$ une grandeur physique de sortie $\overline{y}_i$ .

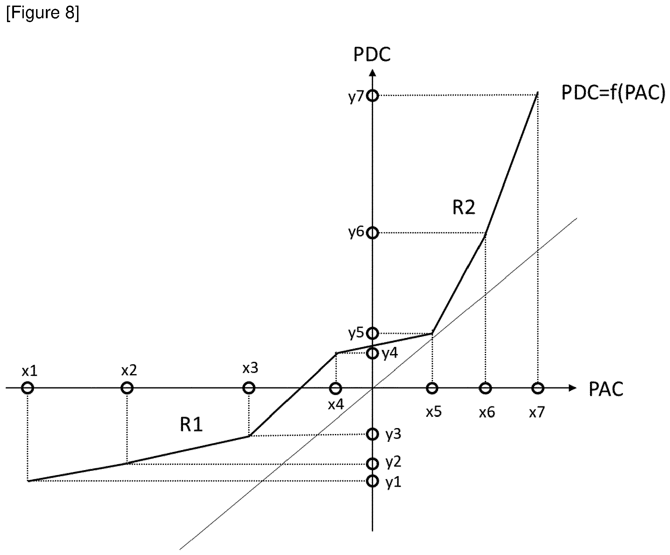

Le procédé 200 comprend tout d'abord une étape 2E1 de détermination, à l'aide du modèle physique non linéaire, d'une pluralité de points de fonctionnement $\overline{M}_i$ de coordonnées $(\overline{x}_i, \overline{y}_i)$ avec $i \in [1, N]$. A partir de ces points, il est ensuite possible d'identifier les plages sur lesquelles le modèle est convexe. On entend par plage un ensemble de valeurs de la grandeur physique d'entrée pour lequel le modèle est convexe. Autrement dit, si le modèle n'est pas convexe, il peut être considéré comme étant convexe par plage, c'est-à-dire qu'il existe au moins deux plages $R_k$ de valeurs de $\overline{x}_i$ (en général une pluralité de plages $R_k$) sur lesquelles le modèle est convexe, l'ensemble des plages $R_k$ couvrant l'ensemble des valeurs possibles de $\overline{x}_i$ (autrement dit, $\forall X, \exists R_k$ tel que $X \in R_k$). Un tel modèle est illustré à la figure 8.

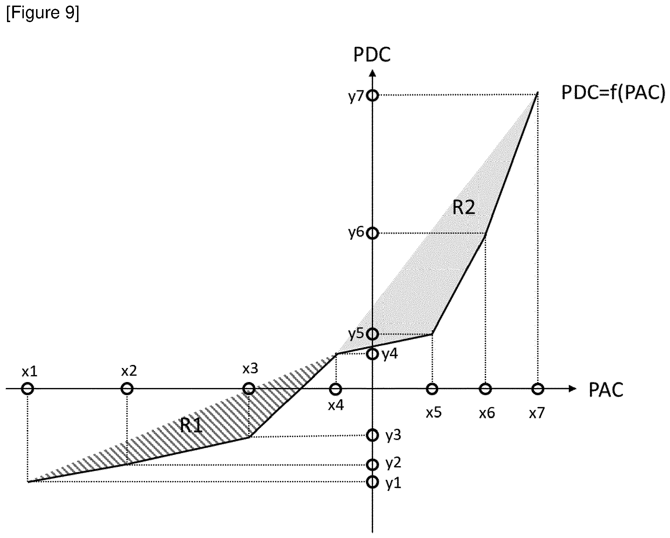

Afin d'identifier ces plages, le procédé 200 selon un deuxième aspect de l'invention comprend une étape 2E2 de détermination, d'une pluralité de plages $R_k$ de valeurs de $\overline{x}_i$, le modèle physique étant convexe sur chacune des plages $R_k$ de la pluralité de plages $R_k$ ainsi déterminées. Cette étape 2E2 est illustrée à la figure 9 dans le cas où deux plages $R_1, R_2$ ont été identifiées. Dans la suite pour des raisons de concision, lorsque l'on écrit $i \in R_k$, cela signifie $\forall i$ tel que $x_i \in R_k$.

Le procédé 200 selon un deuxième aspect de l'invention comprend ensuite une étape 2E3 de détermination de la plage $R_r$ parmi la pluralité de plage $R_k$ telle que $X \in R_r$. Dans l'exemple de la figure 9, si $X$ est compris entre $x_2$ et $x_3$, alors la plage telle que $X \in R_r$ est la plage $R_1$, c'est-à-dire $r = 1$. Une fois la plage d'intérêt déterminée, il est possible d'appliquer les étapes du procédé 100 selon le premier aspect de l'invention en prenant en compte la présence de plusieurs plages $R_k$, une seule plage $R_r$ étant sélectionnée à la fois (ce qui implique donc une variable binaire par plage).

Pour cela, le procédé 200 selon un deuxième aspect de l'invention comprend une étape 2E4 de détermination d'un vecteur optimal $U^{opt}$ parmi une pluralité de vecteurs $U^j$, lesdits vecteurs $U^j$ comportant $N$ coordonnées $u_i^j \in [0,1]$ , les contraintes sur lesdites coordonnées étant :

$$\begin{cases} X = \sum_{R_k} \sum_{i \in R_r} \overline{x}_i \times u_i^j, \forall j \\ \sum_{i \in R_r} u_i^j = 1, \forall j \\ \sum_{i \notin R_r} u_i^j = 0, \forall j \end{cases}$$

Les contraintes $\sum_{i \in R_r} u_i^j = 1$ et $\sum_{i \notin R_r} u_i^j = 0$ signifient que les coordonnées $u_i^j$ du vecteur $U^j$ peuvent être non nulles si et seulement si $i \in R_r$. Dans l'exemple choisi plus haut, lorsque la plage choisie est la plage $R_1$, alors seules les coordonnées $u_1$, $u_2$, $u_3$ et $u_4$ peuvent être non nulles. Cela a pour conséquence que la relation $X = \sum_{R_k} \sum_{i \in R_r} \overline{x}_i \times u_i^j$ peut être réécrite comme étant $X = \sum_{i \in R_r} \overline{x}_i \times u_i^j$ . On retrouve bien ici la formule du procédé 100 selon un premier aspect de l'invention dans laquelle seule la plage $R_r$ a été prise en compte.

Comme précédemment détaillé, il importe cependant de ne sélectionner qu'un seul vecteur $U^{opt}$ parmi la pluralité de vecteurs $U^j$ possibles, que l'on désignera par vecteur optimal $U^{opt}$.

Afin d'effectuer cette sélection, le vecteur optimal $U^{opt}$ est associé à la fonction objectif suivante la plus faible :

$$M \times \sum_{R_k} \sum_{i \in R_r} \overline{y}_i \times u_i^j$$

où $M$ est un coefficient de pondération strictement supérieur à zéro. En tenant compte des contraintes $\sum_{i \in R_r} u_i^j = 1$ et $\sum_{i \notin R_r} u_i^j = 0$ , la fonction peut être reformulée de la manière suivante :

$$M \times \sum_{i \in R_r} \overline{y}_i \times u_i^j$$

On retrouve ici aussi la fonction objectif du procédé 100 selon un premier aspect de l'invention dans laquelle seule la plage $R_r$ a été prise en compte.

Une fois le vecteur optimal $U^{opt}$ déterminé, il est possible de déterminer la grandeur physique de sortie $Y$. Pour cela, le procédé 200 selon un deuxième aspect de l'invention comprend une étape 2E5 de détermination de la grandeur physique de sortie Y donnée par :

$$Y = \sum_{R_k} \sum_{i \in R_r} \overline{y}_i \times u_i^{opt}$$

En tenant compte des contraintes $\sum_{i \in R_r} u_i^j = 1$ et $\sum_{i \notin R_r} u_i^j = 0$ , la grandeur physique de sortie $Y$ peut être reformulée de la manière suivante :

$$Y = \sum_{i \in R_r} \overline{y}_i \times u_i^{opt}$$

On retrouve encore une fois, l'expression de la grandeur physique de sortie du procédé 100 selon un premier aspect de l'invention dans laquelle seule la plage $R_r$ a été prise en compte.

Le procédé 200 selon un deuxième aspect de l'invention peut par exemple être utilisé pour piloter un système tel qu'illustré à la figure 6. Pour rappel, le système en question se compose de panneaux photovoltaïques PV, d'un dispositif de stockage ESS ainsi que d'une grille réseau GRID. Dans cet exemple, le système est modélisé sur un horizon de 24h avec un pas de temps de 1 minute et le stockage est modélisé à l'aide de la fonction $PDC = g(PAC)$ non convexe (mais convexe par plage, le nombre de plages étant ici égal à deux). Dans ce modèle, le système de stockage ESS est représenté par une fonction de pertes énergétiques non linéaire et non convexe qui peut être linéarisée par morceaux. Il est donc possible de comparer le procédé 200 selon un deuxième aspect de l'invention à la méthode SOS2 de l'état de la technique. Le tableau 2 ci-après présente les résultats comparatifs entre ces deux méthodes. On observe que, pour la même solution, le temps de résolution passe de 2 h pour une méthode selon l'état de la technique à 13 secondes pour un procédé 200 selon un deuxième aspect de l'invention.

[Tableau 2]

| | Méthode SOS2 | Procédé (200) selon un premier aspect de l'invention |
|---|---|---|
| Nombre de variables continues | 12960 | 12960 |
| Nombre de variables discrètes | 10080 | 1440 (permettant d'identifier la plage sélectionnée) |
| Temps de calcul de la solution optimale | 2h | 13s |

La diminution de la puissance de calcul nécessaire et donc la rapidité de mise en oeuvre d'un procédé 100,200 selon un premier ou un deuxième aspect de l'invention rend l'utilisation de ce dernier particulièrement adaptée au pilotage d'un système, par exemple un système électrique.

Pour cela, un troisième aspect de l'invention concerne un procédé 300 de pilotage d'un système, par exemple un système électrique tel qu'illustré à la figure 6.

Le procédé selon un troisième aspect de l'invention comprend une étape de détermination de l'évolution temporelle du système, la grandeur physique de sortie du système lors de cette détermination étant déterminée à l'aide d'un procédé selon un premier aspect de l'invention ou un deuxième aspect de l'invention. Comme détaillé en introduction, durant cette étape, l'évolution du système sur un horizon et pour un pas de temps donnés va être calculée. L'utilisation d'un modèle non linéaire étant beaucoup trop coûteuse en temps, il est nécessaire de linéariser ledit modèle afin d'effectuer les calculs. Pour cela, le procédé selon un troisième aspect de l'invention utilise un procédé selon un premier aspect de l'invention lorsque le modèle est convexe et un procédé selon un deuxième aspect de l'invention lorsque le modèle n'est pas convexe (mais seulement convexe par plage).

Il est intéressant de noter que l'utilisation d'un procédé selon un premier ou un deuxième aspect de l'invention permet d'effectuer un pilotage très réactif. En effet, avant de générer une consigne, il est nécessaire d'attendre que les calculs d'évolution temporelle du système soient terminés afin de s'assurer que la consigne est compatible avec la trajectoire souhaitée ou afin de corriger une trajectoire erronée. Or, comme le montrent les tableaux 1 et 2, avec un procédé selon l'état de la technique, une consigne ne pourrait être émise que toute les deux heures dans l'exemple choisi, ce qui est trop long. Avec un procédé selon un premier ou un deuxième aspect de l'invention, pour une même précision dans les calculs, le temps nécessaire n'est plus que de quelques secondes (voire moins si le modèle est convexe), ce qui est compatible avec le pilotage en temps réel d'une installation.

Une fois l'évolution temporelle du système calculée, il possible de déterminer une consigne permettant de maintenir la trajectoire ou, au contraire, de corriger cette dernière. Pour cela, le procédé de pilotage selon un troisième aspect de l'invention comprend une étape de détermination d'une consigne, ladite consigne étant déterminée en fonction de l'évolution temporelle du système déterminée précédemment.

## Revendications

**1.** Procédé assisté par ordinateur (100) de détermination de la grandeur physique de sortie $Y$ d'un système de production d'énergies à partir d'une grandeur physique d'entrée $X$ dudit système et d'un modèle physique non linéaire et convexe dudit système associant à une grandeur physique d'entrée $\overline{x}_i$ une grandeur physique de sortie $\overline{y}_i$, le procédé comprenant :

- une étape d'acquisition d'une pluralité de grandeurs physiques d'entrée et de sortie du système de production d'énergie dans laquelle une pluralité de points expérimentaux $M_n$ de coordonnée $(x_n, y_n)$ sont acquis de sorte à pouvoir déterminer le modèle physique du système;

- une étape (1E1) de détermination, à l'aide du modèle physique non linéaire, d'une pluralité de points de fonctionnement $\overline{M}_i$ de coordonnées $(\overline{x}_i, \overline{y}_i)$ avec $i \in [1, N]$ ;

- une étape (1 E2) de détermination d'un vecteur optimal $U^{opt}$ parmi une pluralité de vecteurs $U^j$, lesdits vecteurs $U^j$ comportant $N$ coordonnées $u_i^j \in [0,1]$, les contraintes sur lesdites coordonnées étant :

$$
\begin{cases}
X = \displaystyle\sum_{i=1}^{N} \overline{x}_i \times u_i^j, \forall j \\
\displaystyle\sum_{i=1}^{N} u_i^j = 1, \forall j
\end{cases}
$$

le vecteur optimal $U^{opt}$ étant associé à la fonction objectif suivante la plus faible :

$$
M \times \sum_{i=1}^{N} \overline{y}_i \times u_i^j
$$

où $M$ est un coefficient de pondération strictement supérieur à zéro ;
- une étape (1E3) de détermination de la grandeur physique de sortie $Y$ donnée par :

$$
Y = \sum_{i=1}^{N} \overline{y}_i \times u_i^{opt}
$$

2. Procédé assisté par ordinateur (200) de détermination de la grandeur physique de sortie $Y$ d'un système de production d'énergies à partir d'une grandeur physique d'entrée $X$ dudit système et d'un modèle physique non linéaire dudit système associant à une grandeur physique d'entrée $\overline{x}_i$ une grandeur physique de sortie $\overline{y}_i$, le procédé comprenant :

- une étape d'acquisition d'une pluralité de grandeurs physiques d'entrée et de sortie du système de production d'énergie dans laquelle une pluralité de points expérimentaux $M_n$ de coordonnée $(x_n, y_n)$ sont acquis de sorte à pouvoir déterminer le modèle physique du système;

- une étape (2E1) de détermination, à l'aide du modèle physique non linéaire, d'une pluralité de points de fonctionnement $\overline{M}_i$ de coordonnées $(\overline{x}_i, \overline{y}_i)$ avec $i \in [1, N]$ ;
- une étape (2E2) de détermination, d'une pluralité de plage $R_k$ de valeurs de $\overline{x}_i$, le modèle physique étant convexe sur chacune des plages $R_k$ de la pluralité de plages $R_k$ ainsi déterminées ;
- une étape (2E3) de détermination de la plage $R_r$ parmi la pluralité de plage $R_k$ telle que $X \in R_r$ ;
- une étape (2E4) de détermination d'un vecteur optimal $U^{opt}$ parmi une pluralité de vecteur $U^j$, lesdits vecteur $U^j$ comportant $N$ coordonnée $u_i^j \in [0,1]$, les contraintes sur lesdites coordonnées étant :

$$
\begin{cases}
X = \displaystyle\sum_{R_k} \sum_{i \in R_r} \overline{x}_i \times u_i^j, \forall j \\
\displaystyle\sum_{i \in R_r} u_i^j = 1, \forall j \\
\displaystyle\sum_{i \notin R_r} u_i^j = 0, \forall j
\end{cases}
$$

le vecteur optimal $U^{opt}$ étant associé à la fonction objectif suivante la plus faible :

$$M \times \sum_{R_k} \sum_{i \in R_r} \overline{y}_i \times u_i^j$$

où $M$ est un coefficient de pondération strictement supérieur à zéro ;
- une étape (2E5) de détermination de la grandeur physique de sortie $Y$ donnée par :

$$Y = \sum_{R_k} \sum_{i \in R_r} \overline{y}_i \times u_i^{opt}$$

3. Procédé (300) de pilotage d'un système de production d'énergie comprenant :

   - Une étape de détermination de l'évolution temporelle du système de production d'énergie, la grandeur physique de sortie du système lors de cette détermination étant déterminée à l'aide d'un procédé selon l'une des revendications précédentes ;
   - une étape de détermination d'une consigne, ladite consigne étant déterminée en fonction de l'évolution temporelle du système de production d'énergie déterminée précédemment.

4. Programme d'ordinateur comprenant des instructions qui, lorsque le programme est exécuté par un ordinateur, conduisent celui-ci à mettre en oeuvre un procédé selon l'une des revendications précédentes.

5. Support de données lisible par ordinateur, sur lequel est enregistré le programme d'ordinateur selon la revendication précédente.

**Patentansprüche**

1. Computergestütztes Verfahren (100) zur Bestimmung der physikalischen Ausgangsgröße $Y$ eines Systems zur Erzeugung von Energien ausgehend von einer physikalischen Eingangsgröße $X$ des Systems und einem nichtlinearen und konvexen physikalischen Modell des Systems, das einer physikalischen Eingangsgröße $\overline{x}_i$ eine physikalische Ausgangsgröße $\overline{y}_i$ zuordnet, wobei das Verfahren Folgendes umfasst:

   - einen Schritt zum Erfassen einer Vielzahl von physikalischen Eingangs- und Ausgangsgrößen des Energieerzeugungssystems, bei dem eine Vielzahl von experimentellen Punkten $M_n$ mit einer Koordinate $(x_n, y_n)$ erfasst werden, so dass das physikalische Modell des Systems bestimmt werden kann;
   - einen Schritt (1E1) des Bestimmens, mithilfe des nichtlinearen physikalischen Modells, einer Vielzahl von Betriebspunkten $\overline{M}_i$ mit den Koordinaten $(\overline{x}_i, \overline{y}_i)$ mit $i \in [1, N]$;

   - einen Schritt (1E2) des Bestimmens eines optimalen Vektors $U^{opt}$ aus einer Vielzahl von Vektoren $U^j$, wobei die Vektoren $U^j$ mit $N$ Koordinaten $u_i^j \in [0,1]$ umfassen, deren Bedingungen folgende sind:

$$\begin{cases} X = \sum_{i=1}^{N} \overline{x}_i \times u_i^j, \forall j \\ \sum_{i=1}^{N} u_i^j = 1, \forall j \end{cases}$$

wobei der optimale Vektor $U^{opt}$ mit der nächstniedrigeren Zielfunktion verknüpft wird:

$$M \times \sum_{i=1}^{N} \overline{y}_i \times u_i^j$$

wobei *M ein* Gewichtungskoeffizient ist, der strikt größer als Null ist;

- einen Schritt (1E3) zur Bestimmung der physikalischen Ausgangsgröße *Y* gegeben durch:

$$Y = \sum_{i=1}^{N} \overline{y}_i \times u_i^{opt}$$

2. Computergestütztes Verfahren (200) zur Bestimmung der physikalischen Ausgangsgröße *Y* eines Systems zur Erzeugung von Energien ausgehend von einer physikalischen Eingangsgröße *X* des Systems und einem nichtlinearen physikalischen Modell des Systems, das einer physikalischen Eingangsgröße $\overline{x}_i$ eine physikalische Ausgangsgröße $\overline{y}_i$ zuordnet, wobei das Verfahren Folgendes umfasst:

- einen Schritt zum Erfassen einer Vielzahl von physikalischen Eingangs- und Ausgangsgrößen des Energieerzeugungssystems, bei dem eine Vielzahl von experimentellen Punkten $M_n$ mit einer Koordinate $(x_n, y_n)$ erfasst werden, so dass das physikalische Modell des Systems bestimmt werden kann;
- einen Schritt (2E1) des Bestimmens, mithilfe des nichtlinearen physikalischen Modells, einer Vielzahl von Betriebspunkten $\overline{M}_i$ mit den Koordinaten $(\overline{x}_i, \overline{y}_i)$ mit $i \in [1, N]$;
- einen Schritt (2E2) zum Bestimmen einer Vielzahl von Bereichen $R_k$ mit Werten von $\overline{x}_i$, wobei das physikalische Modell über jeden der Bereiche $R_k$ aus der Vielzahl der so bestimmten Bereiche $R_k$ konvex ist;
- einen Schritt (2E3) zum Bestimmen des Bereichs $R_r$ aus der Vielzahl von Bereichen $R_k$, so dass $X \in R_r$;
- einen Schritt (2E4) zum Bestimmen eines optimalen Vektors $U^{opt}$ aus einer Vielzahl von Vektoren $U^j$, wobei die Vektoren $U^j$ mit *N* Koordinaten $u_i^j \in [0,1]$ umfassen, wobei die Bedingungen für diese Koordinaten folgende sind:

$$\begin{cases} X = \sum_{R_k} \sum_{i \in R_r} \overline{x}_i \times u_i^j, \forall j \\ \sum_{i \in R_r} u_i^j = 1, \forall j \\ \sum_{i \notin R_r} u_i^j = 0, \forall j \end{cases}$$

wobei der optimale Vektor $U^{opt}$ mit der nächstniedrigeren Zielfunktion verknüpft wird:

$$M \times \sum_{R_k} \sum_{i \in R_r} \overline{y}_i \times u_i^j$$

wobei $M$ ein Gewichtungskoeffizient ist, der strikt größer als Null ist;
- einen Schritt (2E5) zum Bestimmen der physikalischen Ausgangsgröße $Y$ gegeben durch:

$$Y = \sum_{R_k} \sum_{i \in R_r} \overline{y}_i \times u_i^{opt}$$

3. Verfahren (300) zur Steuerung eines Energieerzeugungssystems, umfassend:

    - einen Schritt zur Bestimmung der zeitlichen Entwicklung des Energieerzeugungssystems, wobei die physikalische Ausgangsgröße des Systems bei dieser Bestimmung mithilfe eines Verfahrens gemäß einem der vorhergehenden Ansprüche bestimmt wird;
    - einen Schritt zur Bestimmung eines Sollwerts, wobei der Sollwert in Abhängigkeit von der zuvor bestimmten zeitlichen Entwicklung des Energieerzeugungssystems bestimmt wird.

4. Computerprogramm mit Anweisungen, die, wenn das Programm von einem Computer ausgeführt wird, diesen dazu veranlassen, ein Verfahren nach einem der vorhergehenden Ansprüche durchzuführen.

5. Computerlesbarer Datenträger, auf dem das Computerprogramm nach dem vorhergehenden Anspruch gespeichert ist.

**Claims**

1. Method (100) implemented by computer for determining the output physical quantity $Y$ of an energy production system from an input physical quantity $X$ of said system and a non-linear and convex physical model of said system associating with an input physical quantity $\overline{x}_i$ an output physical quantity $\overline{y}_i$, the method comprising:

    - a step of acquiring a plurality of input and output physical quantities of the energy production system wherein a plurality of experimental points $M_n$ of coordinates $(x_n, y_n)$ are acquired so as to determine the physical model of the system;
    - a step (1E1) of determining, using the non-linear physical model, a plurality of operating points $\overline{M}_i$ of coordinates $(\overline{x}_i, \overline{y}_i)$ with $i \in [1, N]$;
    - a step (1E2) of determining an optimal vector $U^{opt}$ among a plurality of vectors $U^j$, said vectors $U^j$ comprising $N$ coordinates $u_i^j \in [0,1]$, the constraints on said coordinates being:

$$\begin{cases} X = \sum_{i=1}^{N} \overline{x}_i \times u_i^j, \forall j \\ \sum_{i=1}^{N} u_i^j = 1, \forall j \end{cases}$$

the optimal vector $U^{opt}$ being associated with the following lowest objective function:

$$M \times \sum_{i=1}^{N} \overline{y}_i \times u_i^j$$

where $M$ is a weighting coefficient strictly greater than zero;
    - a step (1E3) of determining the output physical quantity $Y$ given by:

$$Y = \sum_{i=1}^{N} \overline{y}_i \times u_i^{opt}$$

**2.** Method (200) implemented by computer for determining the output physical quantity $Y$ of an energy production system from an input physical quantity $X$ of said system and a non-linear physical model of said system associating with an input physical quantity $\overline{x}_i$ an output physical quantity $\overline{y}_i$, the method comprising:

- a step of acquiring a plurality of input and output physical quantities of the energy production system wherein a plurality of experimental points $M_n$ of coordinates $(x_n, y_n)$ are acquired so as to determine the physical model of the system;
- a step (2E1) of determining, using the non-linear physical model, a plurality of operating points $\overline{M}_i$ of coordinates $(\overline{x}_i, \overline{y}_i)$ with $i \in [1, N]$;
- a step (2E2) of determining a plurality of ranges $R_k$ of values of $\overline{x}_i$, the physical model being convex over each of the ranges $R_k$ of the plurality of ranges $R_k$ thus determined;
- a step (2E3) of determining the range $R_r$ among the plurality of ranges $R_k$ such that $X \in R_r$;

- a step (2E4) of determining an optimal vector $U^{opt}$ among a plurality of vectors $U^j$, said vectors $U^j$ comprising $N$ coordinates $u_i^j \in [0,1]$, the constraints on said coordinates being:

$$\begin{cases} X = \sum_{R_k} \sum_{i \in R_r} \overline{x}_i \times u_i^j, \forall j \\ \sum_{i \in R_r} u_i^j = 1, \forall j \\ \sum_{i \notin R_r} u_i^j = 0, \forall j \end{cases}$$

the optimal vector $U^{opt}$ being associated with the following lowest objective function:

$$M \times \sum_{R_k} \sum_{i \in R_r} \overline{y}_i \times u_i^j$$

where $M$ is a weighting coefficient strictly greater than zero;
- a step (2E5) of determining the output physical quantity $Y$ given by:

$$Y = \sum_{R_k} \sum_{i \in R_r} \overline{y}_i \times u_i^{opt}$$

**3.** Method (300) for controlling an energy production system comprising:

- a step of determining the temporal evolution of the system, the output physical quantity of the system during this determination being determined using a method according to one of the preceding claims;
- a step of determining a set point, said set point being determined as a function of the temporal evolution of the system determined previously.

**4.** Computer programme comprising instructions which, when the programme is executed by a computer, lead said computer to implement a method according to one of the preceding claims.

5. Computer readable data medium, on which is stored the computer programme according to the preceding claim.

[Fig. 1]

[Fig. 2]

[Figure 3]

[Figure 4]

[Figure 5]

EP 3 823 161 B1

19

$$X = \sum_{i=1}^{7} x_i . u_i , PDC = \sum_{i=1}^{7} y_i . u_i$$

$$\sum_{i=1}^{7} u_i = 1$$

$$\mu = (0, 0.5, 0.5, 0, 0, 0, 0)$$

[Figure 6]

```
        GRID
    ┌─────┴─────┐
   ESS          PV
```

[Figure 7]

200

```
   2E1
    │
    ▼
   2E2
    │
    ▼
   2E3
    │
    ▼
   2E4
    │
    ▼
   2E5
```

[Figure 8]

[Figure 9]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Short-term prédiction of the output power of PV system based on improved grey prédiction model. **LI YANBIN et al.** PROCEEDINGS OF THE 2014 INTERNATIONAL CONFERENCE ON ADVANCED MECHATRONIC SYSTEMS. IEEE, 10 Août 2014, 547-551